# EUROPEAN PATENT APPLICATION

(11) **EP 1 097 784 A1**
(43) Date of publication of application: **09.05.2001**
(21) Application number: 99121748.0
(22) Date of filing: 03.11.1999
(51) Int. Cl.: B25B 31/00, B25B 27/28, F16B 37/04

(54) **A tool mounting cage nuts and a method for utilising the same**

(71) Applicant: TELEFONAKTIEBOLAGET L M ERICSSON (publ), 126 25 Stockholm (SE)
(72) Inventor: Nilsson, Ingemar, 147 33 Tumba (SE)
(74) Representative: Harrison, Michael Charles

(57) **Abstract**

A tool for mounting cage nuts in mounting holes (28) has an elongate handle (21) and a first end (3) extending essentially perpendicularly to the handle portion. The first end and part of the handle proximal to the first end portion have a width smaller than the internal dimensions of the mounting holes, such that the first end may be inserted through a mounting hole, engaged with a clip (34) of a cage nut and withdrawn through the mounting hole to pull the clip through the hole and into engagement with an edge of the hole. The tool has a second end that is substantially elongate and flat and terminates in an edge of a width and thickness adapted for insertion between the nut (32) and the clips (33,34) of a cage nut. The second end can be used to manoeuvre the nut into position, particularly when access to the mounting hole is difficult.

## Description

### Field of invention

The present invention is directed to a tool for mounting cage nuts and a method for use of the tool. It has particular relevance to the mounting of cage nuts in a cabinet or rack for accommodating electrical equipment.

### Background art

Electrical and electronic equipment consisting of several different and possibly interconnected elements are commonly installed in racks or cabinets for protection. Conventionally, the different equipment elements are bolted to flanges fixed to the walls of the cabinets. To this end, nuts may be fixedly provided at defined intervals along the flanges. However, these cabinets are generally utilised to house many different equipment configurations, so the required positions of the nuts will vary from one form of equipment to another. Thus an arrangement that has found favour is a cabinet wherein the flanges are provided with holes at regular intervals into which cage nuts may be inserted at the required positions.

Cage nuts consist of a nut held within a sprung cage. The cage cradles the base and sides of the nut, and at least two sides of the cage extend upwardly from the cradle around opposing sides of the nut to form clips that are bent first inwardly over the top of the nut to hold the nut captive within the cage and then outwardly. When the cage nut is in place in a mounting hole, the outwardly bent clips are hooked around opposing edges of the hole. During insertion of the nut, the cage must be compressed to enable the clips to pass through the hole. On being released, these clips will spring back into their original shape and so hold the nut captive against the hole.

A typical cabinet has at least about four flanges for fixing equipment elements, with the flanges being positioned at spaced intervals around the walls of the cabinet and extending from top to bottom. Depending on the size of the cabinet, which in some cases may exceed two meters, as many as fifteen or more equipment elements may need to be bolted to the flanges. Constraints on space mean that some of the flanges are positioned close to the walls of the cabinets, leaving distances of around 10 mm in which to position the cage nut.

The inherent resilient force of the sprung cage in most cage nuts is generally prohibitively high to permit the easy insertion of these nuts by hand, particularly when a large number are to be mounted. Special tools exist, one of which functions in the manner of pliers to press together the opposing clip ends to enable their insertion through a hole. This tool is adjustable to some extent, but is nevertheless adapted to insert only a limited range of nut sizes. Furthermore, it is designed to grip the cage nut from behind and therefore cannot easily be used when a nut is to be inserted in a narrow gap between a flange and a wall of the cabinet, as is often the case.

There is thus a need for a tool for inserting cage nuts in a fast and effective manner and which may be employed for a large range of nut sizes and which can be used to insert a cage nut into a hole that is not easily accessible.

### SUMMARY OF INVENTION

In accordance with the invention a mounting tool is provided that has an elongate handle portion and a first end portion connected to one end of said handle portion and extending essentially perpendicularly to the handle portion. The first end portion and at least a length of the handle portion proximal to the first end portion have a width smaller than the length of one of the sides of the mounting holes, such that the first end portion may be inserted through a mounting hole, engaged with a clip of a cage nut and withdrawn through the mounting hole to pull the clip through the hole and into engagement with an edge of the hole. In a preferred embodiment, the tool has a second end portion that is joined to the other end of the handle portion and is substantially elongate and flat and terminates in an edge of a width and thickness adapted for insertion between the nut and the clips of a cage nut. The second end portion can be used to manoeuvre the nut into position, particularly when access to the mounting hole is difficult.

The structure of the tool enables an operator to lever the clips of a cage nut through a mounting hole. This operation is very easy to accomplish with the tool and also allows the tool to be exceptionally simple and light in construction. Moreover, the insertion of the tool end from a side of the hole opposite the nut means that the tool can generally always be manipulated from the side of the hole that is most easily accessible. This arises from the fact that a cage nut is commonly mounted on the opposite side of a mounting hole from the equipment element affixed thereto in order to use the available space most efficiently. This mounting task is facilitated further when access to a mounting hole is restricted by use of the second end portion of the tool, which may be inserted between the inwardly bent portions of the clips and the nut and used to manipulate the cage nut into position against a hole, prior to fixing of the cage ends in the hole.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically depicts a side view of a mounting tool according to one embodiment of the present invention,
- Fig. 2: schematically shows the mounting tool of Fig. 1 viewed from below,
- Fig. 3: schematically depicts the mounting tool of Fig. 1 viewed from one end,
- Fig. 4: schematically shows a side view of a mounting tool in accordance with another embodiment of the present invention,
- Fig. 5: shows a schematic representation of a cabinet for accommodating electrical equipment, and
- Figs. 6a to 6e: schematically illustrate the sequence of steps for mounting a cage nut using the tool according to the present invention.

### DETAILED DESCRIPTION OF THE DRAWINGS

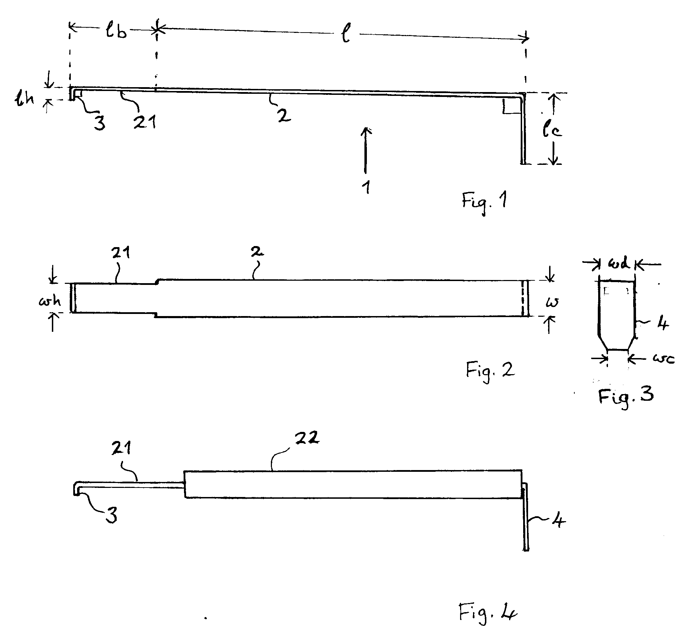

The mounting tool 1 depicted in side view in Fig. 1 comprises an elongate, substantially flat body 2 and a first end portion 3 that is connected to one end of the body 2 and extends at an angle of at most 90° to the body to form a hook and preferably at substantially 90°. A second end portion 4 is connected to the opposing end of the body 2 and may extend substantially at right angles to the body 2 as shown in Fig. 1. The body 2 serves as a handle by which to grip the tool 1 and has a length *l* of between about 100 to 150 mm preferably 120mm. The width of the body *w* is selected to provide adequate strength and resilience to the body while enabling a comfortable grip. The width *w* is selected to be between 5mm to 30 mm and preferably 9mm. The first end portion 3, which hereinafter will be referred to as the hook end, is relatively short with a total length *lh* in a direction substantially perpendicular to the body extension of between 1 to Smm. Preferably the hook end 3 has a length *lh* of 1.8 mm. The hook end 3 has a width *wh* selected to enable it to pass through a hole in a fixing flange of a cabinet or rack, for example. This width *wh* is between 5 and 10 mm, and preferably 7 mm. A length 21 of the body portion 2 proximal to the hook end 3 has the same width *wh* as the hook end 3, to enable at least this part of the body 2 to pass into the hole with the hook end 3. This length *lb* is at least 20 mm and preferably 25 mm.

The second end portion 4 has a length *lc* perpendicular to the body portion 2 of at least 10 mm. Preferably it has a length *lc* of 18 mm, however, in some applications it may be longer. Fig. 3 depicts the mounting tool 1 viewed from the second end portion 4. As is apparent from this figure, the end of the second end portion 4 is preferably tapered towards its end edge. The tapering preferably occurs over a length of between 1 and 5 mm, and preferably 3 mm. The width *wc* at the edge of the end portion is dimensioned to enable its insertion between a nut and its surrounding cage as will be described in more detail below. The edge of the end portion has a width *wc* of between 8 to 5 mm, and preferably of 7 mm. The remaining width *wd* of the second end portion is preferably between 8 and 11 mm, and most preferably 9mm. While in the figures the second end portion is depicted bent substantially at right angles to the body portion 2, it will be understood that the angle between the body portion 2 and the second end portion 4 could be greater than 90° and even.

The tool depicted in Figs. 1 to 3 is preferably made of stainless steel with a thickness of about 0.5 mm. The tool 1, particularly that part formed by the first end portion 3 and the length 21 of the body 2 preferably exhibits some flexibility and resilience. The remaining parts of the tool need not have this flexibility and thus may exhibit a greater thickness than 0.5 mm. However, the tapered end of the second end portion 4 must not exceed a thickness allowing it to be inserted between the nut and opposing flange portions of a cage nut. If necessary, this end portion must be tapered in both width and thickness to permit its insertion into the cage nut. A preferred thickness for this end portion is 0.5 mm or less.

Turning now to Fig. 4, there is shown a mounting tool 1 according to a further embodiment of the present invention. In this figure, like parts are denoted by like reference numerals. The tool according to this embodiment also comprises a body 2 with a flexible portion 21 and first and second end portions 3, 4. However, the body is enclosed in a sleeve 22 by which the tool 1 may more easily be gripped and manoeuvred. The sleeve 22 is preferably substantially tubular and may also be formed with ridges or protrusions to improve the grip. The sleeve 22 may be made of any material capable of being shaped or moulded to the desired form and preferably is made of silicon. The dimensions of the sleeve 22 are selected to provide a comfortable grip. In the illustrated embodiment the tubular sleeve has a diameter of between about 10 to 15 mm. This sleeve 22 may be formed over the body 2 illustrated in Fig. 1. Alternatively, the sleeve 22could be separate from the remaining portions of the tool 1 and be joined at one end to the flexible portion 21 of the body 2 which is attached to the first end portion 3 and at the other end to the second end portion 4.

While the end portions 3 and 4 illustrated in Figs. 1 to 4 consist of a single part, it will be understood that they may be bifurcated or divided into three or more parts. The same is true for the portion of the body part 21 proximal to the first end portion 3. For example, this part of the body 21 may be forked with each fork end supporting a corresponding part of the first end portion 3.

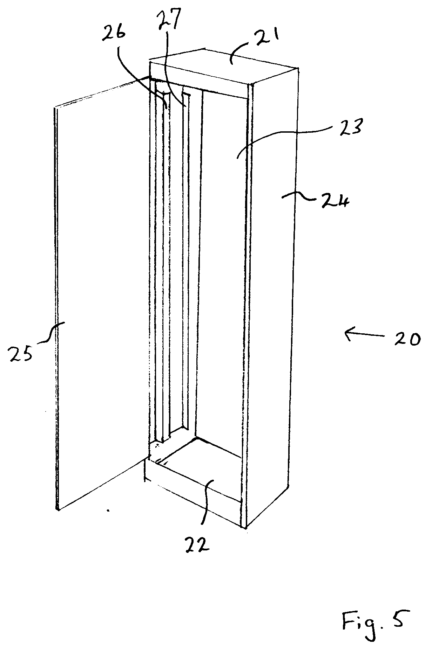

As mentioned above, the tool 1 is used for inserting cage nuts into appropriately dimensioned mounting holes. A common application for such cage nuts is in cabinets or racks for housing electrical and electronic equipment. An example of such a cabinet is shown in Fig. 5. The cabinet 20 shown in Fig. 5 includes a top 21, a base 22, a rear wall 23 and two side walls 24. A door 25 hinged to one of the side walls 24 forms a front wall when closed. Flanges 26, 27 extending substantially from the top to the bottom of the cabinet and to which the electrical equipment can be fastened are attached to the inside walls of the cabinet 20. In Fig. 5, two flanges 26, 27 are shown attached to a side wall 24. It will be understood that flanges may be provided in several positioned around the cabinet in order to ensure adequate support for electrical equipment which is to be attached thereto. Substantially rectangular or preferably square mounting holes (not shown) are provided at regular intervals along the length of each flange. Typically, these mounting holes will be positioned at a distance of 25 mm apart. The dimensions of the mounting holes depend on the size of cage nuts utilised. For electrical cabinets, the holes are typically dimensioned to accommodate cage nuts of the standard size M5 and M6, resulting in hole dimensions of 8.3 x8.3 mm and 9.5 x 9.5 mm, respectively. In order to provide maximal support for the electrical equipment, some of the flanges extend perpendicularly from the side wall 24 of the cabinet; this is the case for the flange positioned towards the front of the cabinet denoted by the numeral 26. Other flanges extend substantially parallel with the cabinet side wall 24, as is illustrated for the flange 27. In this latter case, the flange and mounting holes are spaced from the side wall 24 by only about 10 to 15 mm to maximise the overall capacity of the cabinet.

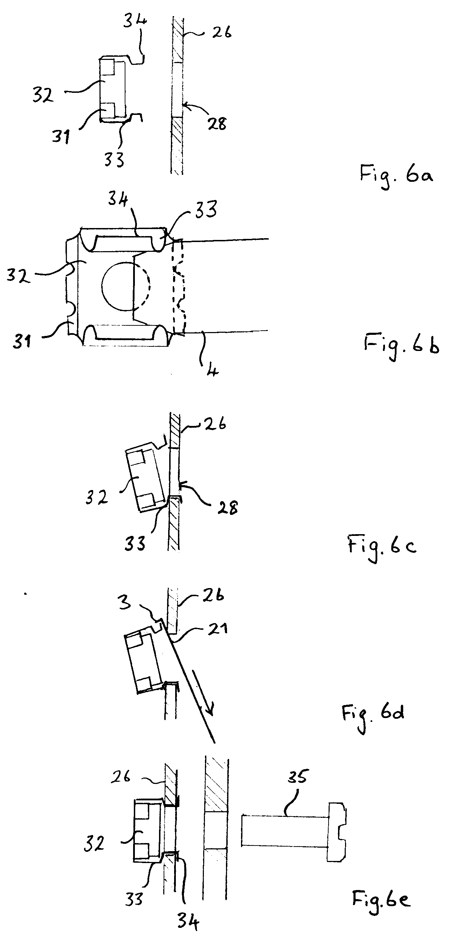

The operation of the tool is illustrated in Figs. 6a to 6d.

Figs. 6a to 6d depict a flange 26 of a cabinet viewed in cross section showing a mounting hole 28. In Fig. 6a, a cage nut 30 is shown in side view in readiness to be inserted into a mounting hole 28. Cage nuts 30 of the kind depicted in the figures are well known in the art. They include a substantially square nut 32 enclosed in a sprung cage 31, which is generally made of sprung steel. The base and sides of the nut 32 are cradled within the cage 31. To this end upwardly bent tabs 31 extending from the base of the cage are provided on two opposing sides of the nut, while longer, upwardly bent strips are provided on the other sides of the nut and extend upwardly around the sides of the nut into clips 33. The ends of the clips 33 are bent at the top face of the nut 32 inwardly and then outwardly at the ends 34. For each clip 33, the distance between the inwardly bent portion and the outwardly bent end 34 is adequate to accommodate the thickness of the cabinet flange 26. The clips 33 are resilient and may be pressed together. On release, the clips 33 spring back resiliently to their original shape.

A cage nut 30 is inserted into a mounting hole 28 using the tool 1 in the following manner. With reference to Fig. 6b, the second end portion 4 of the tool is pushed in between the inwardly bent portion of the clips 33 and the nut 32. Using the tool 1 to manoeuvre the cage nut, one of the lips of the cage nut 30 is inserted through the mounting hole 34 hole and hooked over the far edge of the hole so that the nut can remain temporally in place as illustrated in Fig. 6c. The second end portion 4 of the tool is then withdrawn. The first end portion 3 of the tool is then inserted through the hole 28 from the distal side of the flange 26, that is from the side facing away from the nut 30. The tool 1 is inserted with the first hooked end portion towards the nut 30 and is pushed past the nut until the first end portion engages with the lip 34 of the free flange 33 as shown in Fig. 6d. The tool 1 is then withdrawn through the hole in the direction of the arrow in Fig. 6d, pulling the end 34 of the clip 33 with it. The flexibility and resilience of the first end portion 3 and the length 21 of the body 2 facilitate this manoeuvre. Once the clip end 34 has been pulled through to the distal side, the tension on the clip 33 can be released causing it to return resiliently to its original shape and thereby firmly engage with the other side, of the mounting hole 28 with the clip ends 34 resting on the distal side of the cabinet flange 26 and the inwardly bent parts of the clips 33 on the proximal side with the nut 32. This is illustrated in Fig. 6e. With the nut 32 now firmly anchored in position, various electrical assemblies may be affixed to the flanges using the nut and a corresponding bolt 35.

It will be understood, that the initial positioning of the nut with one lip over the edge of a mounting hole 28 may be performed by hand. However, the second end portion 4 of the tool 1 is particularly effective for this task when the mounting hole is not easily accessible. This may be the case, for example, when the cabinet flange is very close to a wall of the cabinet, or when the mounting hole is close to already mounted equipment.

## Claims

1. A tool for mounting cage nuts at mounting holes, the cage nuts comprising a nut held captively in a sprung cage, which includes at least two resilient clips adapted to fit over opposing edges of a mounting hole, the tool being characterised by an elongate handle portion (2) and a first end portion (3) extending from one end of said handle portion at an angle of at most 90° to said handle portion, the first end portion (3) and at least a length of the handle portion (21) proximal to the first end portion having a width smaller than the internal dimensions of the mounting holes, such that the first end portion may be inserted through a mounting hole, hooked over a clip of a cage nut and retracted through the mounting hole to pull the clip through the hole and into engagement with an edge of the hole.

2. A tool as claimed in claim 1, characterised in that the length of the handle portion (21) proximal to the first end portion (3) is at least 5 mm and that the length of the first end portion (3) is at least 1 mm.

3. A tool as claimed in claim 1 or 2, characterised in that the first end portion (3) and the length of the handle portion (21) proximal the first end portion are substantially flat.

4. A tool as claimed in any previous claim, further characterised by a second end portion (4) connected to the other end of said handle portion (2), the second end portion being substantially elongate and flat and terminating in an edge of a width and thickness adapted for insertion between the nut and two opposing clips.

5. A tool as claimed in any previous claim, further characterised in that said second end portion (4) extends at an angle of at least 90° to said handle portion (2).

6. A tool as claimed in any previous claim, characterised in that said handle portion (2) and said first end portion (3) are integrally formed.

7. A tool as claimed in any previous claim, characterised in that said second end portion (4) is integrally formed with said handle portion (2).

8. A tool as claimed in any previous claim, characterised in that said handle portion (2) includes a substantially tubular sleeve.

9. A tool as claimed in any previous claim, characterised in that said first end portion (3) has a width of at least 3 mm.

10. A tool as claimed in any previous claim, characterised in that the edge of said second end portion (4) has a width of at most 7 mm

11. A tool as claimed in claim 10, characterised in that said second end portion has a width of 9mm tapered to said edge.

12. A tool as claimed in any previous claim, characterised in that the length of the handle portion (21) proximal to the first end portion is flexible.

13. A tool as claimed in any previous claim, characterised in that the first end portion (3) is flexible.

14. A tool as claimed in any previous claim, characterised in that at least the first end portion (3) and handle portion (2) are of stainless steel.

15. A tool for mounting cage nuts in substantially rectangular mounting holes, the cage nuts comprising a nut held captive in a sprung cage that includes at least two resilient clips adapted to fit over opposing edges of a mounting hole, the tool being characterised by an elongate handle portion (2) and a first end portion (3) extending from one end of said handle portion at an angle of at most 90° to said handle portion, the first end portion (3) and at least a length of the handle portion (21) proximal to the first end portion having a width smaller than the length of one of the sides of the mounting holes, such that the first end portion may be inserted through a mounting hole, hooked over a clip of a cage nut and retracted through the mounting hole to pull the clip through the hole and into engagement with an edge of the hole, the tools further including a second end portion (4) joined to the other end of said handle portion (2), the second end portion being substantially elongate and flat and terminating in an edge of a width and thickness suitable for insertion between the nut (32) and two opposing clips (33) of the cage nut.

16. A tools as claimed in claim 15, characterised in that said second end portion (4) is bent at an angle of at least 90° to said handle portion (2).

17. A method for using a tool as claimed in any previous claim to insert cage nuts into substantially rectangular holes, characterised by including:
positioning a cage nut on one side of a hole with a first clip hooked over an edge of the mounting hole,
inserting the first end portion (3) of the tool (1) through the hole from the other side and hooking a second clip of the cage nut,
withdrawing the first end portion (2) back through the hole entraining the second clip until the outwardly extending clip engages with a hole edge.

18. A method as claimed in claim 17, characterised in that said positioning step includes
inserting the second end portion (4) of said tool (1) between the nut
and opposing clips (33) of the cage nut until it is clamped between the same
manoeuvring the cage nut using the tool (1) to hook one clip of the cage nut over the edge of the mounting hole.
